# FASCICULE DE BREVET EUROPEEN

(11) **EP 0 694 454 B1**
(45) Date de publication et mention de la délivrance du brevet: **11.11.1998**
(21) Numéro de dépôt: 95111406.5
(22) Date de dépôt: 20.07.1995
(51) Int. Cl.: B60S 1/04, B60H 1/28

(54) **Dispositif modulaire pour le lavage et l'essuyage d'un pare-brise de véhicule**
Modulare Einrichtung zum Waschen und Wischen einer Fahrzeugscheibe
Modular device for washing and wiping a vehicle windscreen

(30) Priorité: 26.07.1994 FR 9409335
(43) Date de publication de la demande: 31.01.1996
(73) Titulaire: VALEO SYSTEMES D'ESSUYAGE, 78321 La Verrière (FR)
(72) Inventeur: Berge, Gilles, F-78120 Rambouillet (FR); Roumegoux, Jean-Louis, F-75116 Paris (FR); Eustache, Jean-Pierre, F-92160 Antony (FR)
(74) Mandataire: Gamonal, Didier

(56) Documents cités:
- EP-A- 0 410 113
- EP-A- 0 588 708
- DE-A- 4 329 330
- DE-U- 9 113 392
- INGENIEURS DE L'AUTOMOBILE, no. 682, GARCHES (FR), pages 42-45, XP 000381999 GIL, M. 'La fonction grille d'auvent'

## Description

La présente invention concerne un dispositif pour le lavage et l'essuyage d'un pare-brise de véhicule, notamment de véhicule automobile, comportant un capot situé en retrait du bord inférieur du pare-brise.

L'espace situé entre le capot et le bord inférieur du pare-brise sert habituellement au montage de moyens d'essuyage du pare-brise, ainsi qu'une admission d'air depuis l'extérieur vers l'intérieur du véhicule, munie en entrée d'une grille d'entrée d'air. Le véhicule comporte également des moyens pour le lavage du pare-brise, constitué d'un réservoir de liquide lave-glace et de moyens pour réaliser l'aspersion du pare-brise avec ce liquide.

Le réservoir de liquide lave-glace est habituellement disposé sous le capot, dans le compartiment avant du véhicule. Le montage sur les véhicules des moyens d'essuyage, de l'admission d'air, de la grille d'entrée d'air, du réservoir et des moyens pour réaliser l'aspersion du pare-brise sont des opérations qui requièrent un temps de main-d'oeuvre important car les opérations d'assemblage et de montage sont difficilement automatisable et elles sont donc particulièrement coûteuses.

On a proposé d'intégrer dans des dispositifs d'essuyage et de lavage monoblocs la grille d'entrée d'air, l'admission d'air, le réservoir de liquide lave-glace, les moyens d'essuyage et les moyens pour réaliser l'aspersion du pare-brise, de façon à simplifier l'opération de montage dans le véhicule et la rendre automatisable.

Il a également été proposé, par exemple par la demande de brevet EP-A-0 588 708, un dispositif modulaire pour l'essuyage et le lavage pour le pare-brise d'un véhicule qui évite de faire appel à des dispositifs d'essuyage et de lavage monoblocs qui soient spécifiques à un véhicule donné et qui comporte, à cet effet, au moins un module commun utilisable sur différents types de véhicules, permettant ainsi de réduire les coûts de fabrication en bénéficiant d'économie d'échelle.

Plus particulièrement le dispositif modulaire est constitué d'au moins deux modules à assembler entre eux et au reste du véhicule, l'un des deux modules étant apte à contenir un liquide lave-glace en formant réservoir et l'autre module supportant des moyens d'essuyage du pare-brise.

De façon classique, comme par exemple dans la demande de brevet EP-A-0 410 113, les dispositifs de filtration d'air sont fixés sur le boîtier d'air du dispositif de ventilation et/ou de climatisation du véhicule.

La présente invention a pour but de proposer un perfectionnement à la conception précitée d'un dispositif modulaire de lavage et d'essuyage permettant d'en améliorer la modularité et d'amplifier les avantages résultant de sa facilité d'assemblage et de montage.

A cet effet, l'invention propose un dispositif modulaire ou le lavage et l'essuyage d'un pare-brise, du type mentionné précédemment (Dispositif tel que révélé dans EP-A-0 588 708 et défini dans le préambule de la revendication 1), caractérisé en ce que l'un des modules comporte au moins un dispositif de filtration d'air appartenant au circuit de climatisation et/ou de ventilation du véhicule.

Des modes de réalisation de l'invention sont précisés dans les revendications 2 et 3.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective illustrant un véhicule équipé d'un dispositif modulaire selon l'état de la technique ;
- les figures 2 et 3 sont des vues de détail illustrant encore une autre variante comportant des moyens appartenant au circuit de ventilation et/ou de climatisation du véhicule.

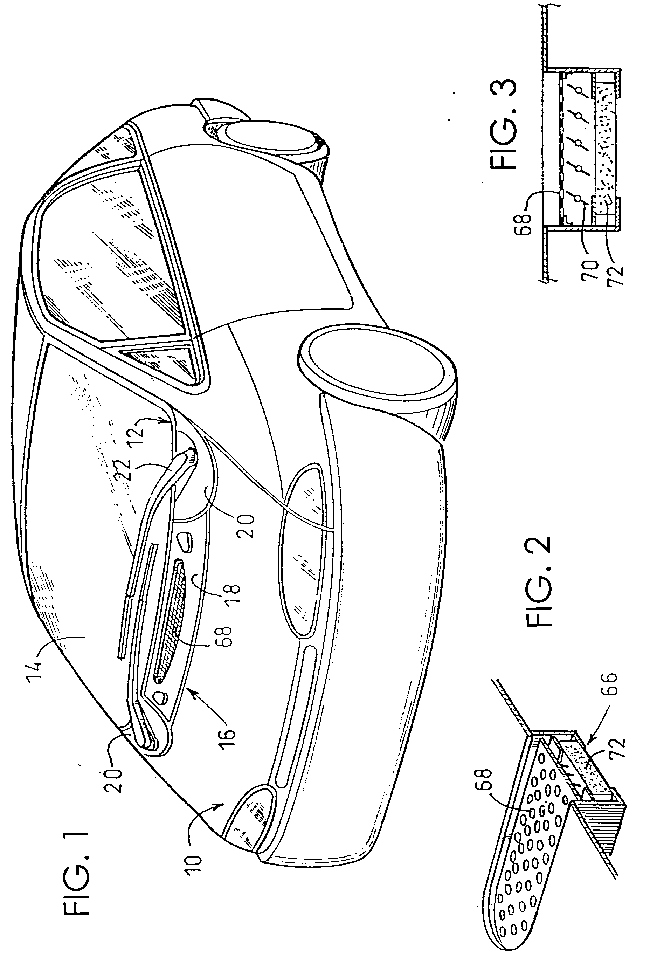

On a représenté sur la figure 1, de façon schématique et en perspective, un véhicule automobile comportant un capot 10 situé en retrait du bord inférieur 12 du pare-brise 14, équipé d'un dispositif modulaire 16 pour le lavage et l'essuyage du pare-brise 14 selon l'état de la technique.

Selon l'exemple de réalisation représente, le dispositif modulaire 16 est constitué d'un module formant réservoir 18 et de deux modules d'essuyage 20.

Le module formant réservoir présente une face supérieure apparente généralement plane et située dans le prolongement de la surface externe du capot 10, s'étendant longitudinalement sur une partie de la largeur du véhicule de part et d'autre d'un plan de symétrie longitudinale pour la carrosserie du véhicule et latéralement entre le capot 10 et le bord inférieur 12 du pare-brise 14.

Les modules d'essuyage 20 présentent également une face supérieure apparente s'étendant généralement dans le prolongement de la surface externe du capot 10 et sont disposés de part et d'autre du module formant réservoir 18, qu'ils prolongent jusqu'aux côtés du véhicule en couvrant l'espace compris entre le capot 10 et le bord inférieur 12 du pare-brise 14.

Chaque module d'essuyage 20 porte un bras d'essuie-glace 22, connu en lui-même, muni à une extrémité de moyens de fixation sur un arbre d'entraînement couplé à des moyens d'entraînement en rotation de l'arbre et muni à l'autre extrémité d'un balai portant une raclette d'essuyage du pare-brise 14.

Dans le mode de réalisation selon l'invention illustré sur les figures 2 et 3, il est possible d'incorporer, soit au module central de lavage 18 soit aux modules d'essuyage 20, des composants ou organes 66 appartenant au circuit de ventilation et/ou de climatisation du véhicule comportant par exemple une grille supérieure 68 et des ailettes articulées 70, ainsi qu'un élément filtrant 72.

Plus précisément, dans l'exemple représenté, le module central 18 comporte une ouverture centrale qui va autoriser l'admission d'air dans un appareil de chauffage et/ou de climatisation, cette ouverture centrale comportant la grille supérieure 68, plus communément appelé grille d'auvent, qui va interdire la pénétration d'objets indésirables dans l'appareil de chauffage et/ou climatisation, cette grille ne poursuivant pas les ailettes mobiles 70 qui vont permettre de réguler le débit d'air admis dans cet appareil de chauffage et/ou climatisation et, en deçà de ces ailettes, un filtre 72 contre les odeurs ou les poussières permettra de filtrer l'air admis dans l'appareil de chauffage/climatisation.

## Revendications

1. Dispositif modulaire pour le lavage et l'essuyage d'un pare-brise de véhicule comportant un capot (10) situé en retrait du bord inférieur (12) du pare-brise (14), du type constitué par au moins deux modules (18, 20) à assembler entre eux et au reste du véhicule, l'un des modules (18) étant apte à contenir un liquide lave-glace en formant réservoir et l'autre module (20) supportant des moyens d'essuyage du pare-brise, caractérisé en ce que l'un des modules comporte au moins un dispositif de filtration d'air (72) appartenant au circuit de climatisation et/ou de ventilation du véhicule.

2. Dispositif selon la revendication 1, caractérisé en ce que le dispositif de filtration d'air (72) est un dispositif de filtration contre la pourssière.

3. Dispositif selon la revendication 1, caractérisé en ce que le dispositif de filtration d'air (72) est un dispositif de filtration contre les odeurs.

## Claims

1. Modular apparatus for washing and wiping a windscreen of a vehicle having a bonnet (10) extending away from the lower edge (12) of the windscreen (14), being of the type consisting of at least two modules (18, 20) for assembly together and to the rest of the vehicle, one of the modules (18) being adapted to contain a screen washing liquid and constituting a reservoir, and the other module (20) supporting a means for wiping the windscreen, characterised in that one of the modules includes at least one air filter device (72) of an air conditioning and/or ventilating circuit of the vehicle.

2. Apparatus according to Claim 1, characterized in that the air filter device (72) is a dust filtering device.

3. Apparatus according to Claim 1, characterised in that the air filter device (72) is an odour filtering device.

## Patentansprüche

1. Modulare Einrichtung zum Waschen und Wischen der Windschutzscheibe eines Fahrzeugs, das eine Fronthaube (10) umfaßt, die von der Unterkante (12) der Windschutzscheibe (14) zurückversetzt angeordnet ist, bestehend aus mindestens zwei Modulen (18, 20), die miteinander und mit dem Rest des Fahrzeugs zu verbinden sind, wobei eines der beiden Module (18) eine Scheibenwaschflüssigkeit enthalten kann, indem es einen Behälter bildet, während das andere Modul (20) Wischmittel zum Wischen der Windschutzscheibe trägt, **dadurch gekennzeichnet**, daß eines der Module mindestens eine Luftfiltervorrichtung (72) umfaßt, die zum Klimatisierungs- und/oder Belüftungskreislauf des Fahrzeugs gehört.

2. Einrichtung nach Anspruch 1, **dadurch gekennzeichnet,** daß die Luftfiltervorrichtung (72) eine Staubfiltervorrichtung ist.

3. Einrichtung nach Anspruch 1, **dadurch gekennzeichnet,** daß die Luftfiltervorrichtung (72) eine Geruchsfiltervorrichtung ist.
